# FASCICULE DE BREVET EUROPEEN

(11) **EP 2 303 609 B1**
(45) Date de publication et mention de la délivrance du brevet: **20.12.2017**
(21) Numéro de dépôt: 09757274.7
(22) Date de dépôt: 03.06.2009
(51) Int. Cl.: B60C 29/06

(54) **DISPOSITIF DE PURGE POUR ENSEMBLE MONTE ET PROCEDE DE DEGONFLAGE D'UN ENSEMBLE MONTE**
ENTLÜFTUNGSVORRICHTUNG FÜR EINE MONTIERTE EINHEIT UND VERFAHREN ZUM ENTLEEREN EINER MONTIERTEN EINHEIT
PURGING DEVICE FOR ASSEMBLED UNIT AND METHOD OF DEFLATING AN ASSEMBLED UNIT

(30) Priorité: 04.06.2008 FR 0853697
(43) Date de publication de la demande: 06.04.2011
(73) Titulaire: Compagnie Générale des Etablissements Michelin, 63000 Clermont-Ferrand (FR)
(72) Inventeur: FERLIN, Olivier, F-63200 Malauzat (FR)
(74) Mandataire: Le Cam, Stéphane Georges Elie
(86) Numéro de dépôt international: PCT/EP2009/003944
(87) Numéro de publication internationale: WO 2009/146891

(56) Documents cités:
- CN-Y- 200 942 695
- GB-A- 2 206 673
- US-A- 2 849 047

## Description

La présente invention concerne un dispositif de purge pour un ensemble monté pour véhicule, constitué d'une roue comportant une jante et d'un pneumatique, ledit ensemble monté étant destiné à équiper un véhicule ou engin lourd de type génie civil,.

Bien que non limitée à ce type d'application, l'invention sera plus particulièrement décrite en référence à des pneumatiques pour véhicule de type dumper travaillant dans des mines et présentant une largeur axiale supérieure à 18 pouces.

Les réalisations usuelles des ensembles montés sont de deux types en ce qui concerne les jantes. Ils sont réalisés soit avec des jantes dites à base creuse, possédant des sièges tronconiques inclinés par rapport à l'axe de rotation de l'ensemble d'un angle de 5° ou de 15°, soit avec des jantes à fond plat ou pratiquement plat ayant des sièges inclinés soit à 0°, soit à 5° par rapport à l'axe de rotation.

Les jantes dites à base creuse comportent une gorge de montage dont le diamètre est nettement inférieur au diamètre nominal de la jante. Ce diamètre intérieur de la jante peut être considéré par les utilisateurs comme trop petit, car il ne permet pas de choisir par exemple des tambours de freins de dimensions adaptées à un freinage efficace des véhicules de plus en plus puissants par rapport à leurs poids.

De ce fait, ces jantes sont couramment employées pour les ensembles montés destinés à des véhicules de type Tourisme et/ou Poids-Lourds, mais le sont beaucoup moins et parfois pas du tout pour les autres types de véhicules, tels que, par exemple, les engins de chantier et Génie Civil.

Pour la réalisation d'ensemble monté, notamment de type "tubeless", une jante à fond plat nécessite la présence d'au moins un anneau latéral amovible, d'un anneau de verrouillage et d'un joint d'étanchéité, et évidemment du fond de jante muni d'un rebord fixe du côté opposé au côté où les pièces sont amovibles. En effet, les dimensions des roues des véhicules et celles des pneumatiques et notamment la raideur des zones basses nécessitent que lesdites roues soient réalisées en plusieurs parties pour permettre le montage du pneumatique sur une jante. Il faut donc au minimum trois pièces. Dans la majorité des cas, le nombre de pièces nécessaires est supérieur à trois et peut atteindre parfois six pièces pour les grosses dimensions de pneumatique, sans compter les pièces nécessaires à la fixation des roues sur le véhicule. Exception faite des joints d'étanchéité en caoutchouc, les pièces d'une jante sont métalliques, et en conséquence, lourdes, encombrantes, et difficiles à manutentionner. Il s'ensuit que les montage et démontage de pneumatiques de grande et très grande dimension constituent des opérations difficiles et longues. La mise en place et/ou l'enlèvement d'une roue équipée d'un tel pneumatique requièrent l'immobilisation du véhicule ou de l'engin pendant une durée non négligeable et donc nuisible à la productivité recherchée dans l'utilisation de ces véhicules.

La demande de brevet WO 00/71365 a décrit une technique permettant de simplifier le montage des pneumatiques, ceux-ci étant montés directement sur le moyeu, faisant alors office de jante. Des anneaux de montage indépendants jouent le rôle des sièges de jante et sont maintenus en place par des anneaux de blocage qui se solidarisent au moyeu du fait notamment de profils complémentaires. Selon cette technique, l'anneau de verrouillage est composé d'un mélange de caoutchouc vulcanisé renforcé par et enrobant un anneau de renforcement circonférentiellement élastique et radialement résistant à la compression.

Une telle technique est tout à fait intéressante puisqu'elle permet d'éliminer les phases de montage sur une jante ainsi que la fixation d'une roue sur le véhicule, les pneumatiques étant directement montés sur le moyeu par l'intermédiaire des anneaux de montage et anneaux de verrouillage. En outre, le nombre d'éléments étant fortement diminué les phases de manutention de ces éléments sont simplifiées.

Toutefois, que cette dernière technique soit mise en oeuvre ou que les pneumatiques soient associés à des roues constituées de plusieurs pièces, lorsqu'il est nécessaire de changer un pneumatique ou d'effectuer une permutation sur le véhicule de deux pneumatiques, une étape du démontage de la roue et/ou du pneumatique est toujours nécessaire ; il s'agit du dégonflage du pneumatique, indispensable pour un changement de pneumatique et quasi-indispensable au moins en partie pour une permutation des ensembles montés afin d'en diminuer le poids.

Le temps de dégonflage d'un pneumatique de dimension 59/80R63 équipant un véhicule de type dumper est supérieur à trente minutes, ce qui entraîne pour une permutation complète des pneumatiques des véhicules un temps cumulé de dégonflage d'au moins deux heures.

Sachant que dans une mine un cycle de travail correspondant au transport d'une benne pleine d'un véhicule de type dumper est le plus souvent inférieur à ce temps de trente minutes, il apparaît clairement que les temps d'intervention sur les pneumatiques ont une influence directe et conséquente sur la productivité des véhicules.

Il existe donc notamment le souhait de réduire le temps de dégonflage de tels pneumatiques.

Les pneumatiques pour engins de génie civil, tels que les véhicules utilisés dans les mines par exemple de type dumper, sont habituellement soumis à une pression comprise entre 4 et 10 bars pour des charges et dimensions usuelles.

Les techniques actuelles de dégonflage consistent libérer la partie interne de la valve de gonflage pour laisser s'échapper l'air. Diminuer le temps de dégonflage pourrait consister à augmenter la dimension des systèmes de valve de gonflage actuels mais leur conception deviendrait délicate et les débits occasionnés du fait des pressions et du volume d'air dans ce type de pneumatiques conduiraient à une mise en danger de l'opérateur qui doit libérer la partie interne de la valve.

Des valves existantes de type papillon, boisseau ou à clapet avec des dimensions adaptées, notamment dans les documents D1 (GB 2 206 673) et D2 (CN 200 942 695), ont été envisagées mais elles présentent différents inconvénients. D'une part, elles sont d'un encombrement trop important pour être mise en place sur certains véhicules et d'autre part, l'entretien de ces vannes nécessite un démontage complet. L'entretien doit être pris en compte car lorsque l'air s'échappe de l'ensemble monté, il entraîne avec lui des particules telles que des résidus de corrosion provenant de la roue, des fragments de pneumatique, dans les cas de détérioration de celui-ci, ainsi encore que des liquides provenant des résultats de condensation et des produits spécifiques destinés à lutter contre la corrosion. Le document D3 (US 2849047) décrit également un système de contrôle de pression d'air pour réguler la pression de gonflage d'un pneumatique.

Dans leurs études et notamment durant l'étude de la réalisation d'ensemble monté comportant des pneumatiques de grandes dimensions, notamment dont la largeur axiale est supérieure à 18 pouces, destinés à équiper des véhicules de type dumper dont on souhaite sans cesse augmenter la productivité, les inventeurs se sont ainsi donnés pour mission d'améliorer les temps nécessaires au dégonflage des pneumatiques.

Ce but a été atteint selon l'invention par un dispositif de purge pour un ensemble monté pour véhicule constitué d'une roue comportant une jante et d'un pneumatique, ledit dispositif comprenant un corps associé au conduit de gonflage de l'ensemble monté, ledit corps étant destiné à être soumis à la pression de gonflage de l'ensemble monté, et un piston mobile au sein du corps, ledit piston actionnant un clapet, solidaire du piston, entre une position de fermeture et une position de purge du corps, ledit clapet étant normalement fermé, le clapet et le piston présentant chacun une face destinée à être exposée à l'air de gonflage au sein du corps en position de fermeture, l'ouverture du clapet étant obtenue par action d'une force de commande sur le piston, la force de commande étant assurée par de l'air comprimé conduit jusqu'à la surface du piston qui n'est pas destinée à être au contact de l'air de gonflage en position de fermeture, et une cavité associée au piston et au clapet formant un volume étanche comportant un orifice associé au conduit de gonflage et un autre orifice, en face de l'orifice, pour conduire l'air de gonflage à l'ensemble monté.

Au sens de l'invention, l'ensemble monté englobe tout type d'ensemble pneumatique/roue, quel que soit le type de roue ou jante et notamment des ensembles montés tels que cité précédemment et décrit dans la demande de brevet WO 00/71365.

Selon l'invention, le dispositif est fixé sur le circuit de gonflage et se compose d'un corps formant une cavité dans laquelle peut se déplacer un piston pour actionner un clapet. Le déplacement du clapet va permettre l'ouverture d'un orifice assurant la purge de l'ensemble monté. Le dispositif selon l'invention présente ainsi un système dans lequel, après gonflage, une face du piston et une face du clapet sont soumises à la pression de gonflage de l'ensemble monté. Si lesdites surfaces du piston et du clapet sont identiques, la pression de gonflage de l'ensemble monté n'a aucun effet quant à la mobilité de l'ensemble piston et clapet au sein du corps du dispositif de purge. Il est possible de prévoir une surface du piston légèrement plus grande que celle du clapet, de sorte que la pression de gonflage assure la position fermée du clapet. Il est encore possible de prévoir un moyen, par exemples élastique ou compressible, qui exerce une force complémentaire par exemple sur la surface du clapet qui n'est pas au contact de l'air de gonflage pour assurer que la position normale du clapet est la position fermée.

Le dispositif de purge ainsi défini et plus exactement son orifice de purge selon l'invention peuvent être dimensionnés pour permettre de diminuer le temps nécessaire pour dégonfler un pneumatique. En effet, s'agissant non plus d'adapter une valve classique de gonflage à des conditions spécifiques d'un dégonflage par une intervention correspondant au démontage d'une partie interne d'une valve, il a été possible de définir le dispositif selon l'invention qui peut être ouvert sans aucun risque pour un opérateur.

Selon un mode de réalisation préféré de l'invention, la force de commande exercée sur le piston est assurée par de l'air comprimé conduit jusqu'à la surface du piston qui n'est pas destinée à être au contact de l'air de gonflage en position de fermeture

La pression de l'air qui fait office de force de commande peut être relativement faible dans la mesure où le déplacement de l'ensemble piston/clapet ne vient pas s'opposer à la pression de gonflage de l'ensemble monté.

Dans le cas évoqué précédemment d'une surface du piston légèrement supérieure à celle du clapet, la force exercée par l'air comprimé sur la surface du piston qui n'est pas au contact de l'air de gonflage doit pouvoir compenser la force correspondant à l'action de la pression de gonflage sur la surface du piston égale à la différence entre les surfaces du piston et du clapet. La surface de commande, qui correspond au sens de l'invention à la surface du piston sur laquelle s'exerce la force de commande, étant supérieure à la différence entre les surfaces du piston et du clapet, la pression de l'air comprimé qui vient exercer la force de commande peut être choisie inférieure à celle de la pression de gonflage de l'ensemble monté tout en permettant d'obtenir le déplacement du piston du dispositif de purge entraînant l'ouverture du clapet.

Dans l'autre cas évoqué précédemment d'un moyen, par exemples élastique ou compressible, qui exerce une force complémentaire sur la surface du clapet qui n'est pas au contact de l'air de gonflage pour assurer sa position fermée, la force exercée par l'air comprimé sur la surface du piston qui n'est pas au contact de l'air de gonflage doit pouvoir compenser l'action exercer par ledit moyen. Selon le moyen choisi, la pression de l'air de commande peut encore être relativement peu élevée.

Selon d'autres modes de réalisation de l'invention, la force de commande est assurée par tout autre moyen connu de l'homme du métier tels que des moyens mécaniques ou électriques, par exemple par action d'un électro-aimant.

Selon une variante de réalisation l'invention, la valve de purge est fixée sur le fond de jante de sorte que l'air soit évacué dans l'espace axialement entre les roues du véhicule. Selon une telle réalisation, l'air est évacué dans une zone relativement close par le dessous du camion, le sol et les parties pleines des roues. Dans le cas de roues jumelées, par exemple sur l'essieu arrière d'un véhicule, l'air peut ainsi être évacué depuis chacun des ensembles montés dans l'espace entre les roues jumelées.

Selon une autre variante de réalisation de l'invention, le dispositif de purge est éloignée de la roue et reliée à celle-ci par un tuyau ou tube formant partie du circuit de gonflage. Cette variante de réalisation pourra être préférée notamment dans les cas où les véhicules existants ne prévoient pas un passage pour le tuyau de gonflage suffisant nécessaire lors des démontages de roues pour permettre d'associer le dispositif de purge à la roue. Il est nécessaire selon cette variante que la section du tube reliant le dispositif de purge au trou de gonflage de la roue soit au moins équivalente à la section de l'orifice de purge du dispositif selon l'invention.

Selon le mode de réalisation préféré de l'invention évoqué ci-dessus, selon lequel l'air comprimé vient exercer la force de commande conduisant à l'ouverture du dispositif de purge, ledit air comprimé peut être amené par un conduit jusqu'au dispositif de purge. Il s'agit par exemple d'un tube rigide dont une extrémité est fixée à la partie radialement intérieure du dispositif de purge pour amener ledit air comprimé jusqu'à la surface du piston et dont l'autre extrémité est accessible à un opérateur pour raccorder un compresseur. Cette autre extrémité, accessible par un opérateur, est avantageusement située dans l'espace axialement extérieur aux roues, c'est-à-dire avantageusement en dehors des zones où l'air sera évacué de façon à limiter les risques liés au dégonflage pour l'opérateur.

Une variante avantageuse de l'invention prévoit que, dans sa position ouverte, le clapet crée une section d'évacuation annulaire correspondant à la périphérie dudit clapet. Selon cette variante de l'invention, pour une section globale d'évacuation de l'air donnée, la largeur de l'ouverture est limitée et permet ainsi d'éviter le passage de débris contenu dans l'ensemble monté et de dimensions supérieures à cette largeur de l'ouverture. Cette variante de réalisation de l'invention accentue encore l'aspect sécuritaire du dégonflage en éliminant les particules de gros diamètre pouvant être entraînées pendant un dégonflage.

Selon un premier mode de réalisation de l'invention, le dispositif de purge libère l'air de gonflage par un orifice.

De préférence, l'orifice présente au moins une dimension caractéristique inférieure à 10 mm. Par dimension caractéristique d'un orifice, on entend au sens de l'invention une dimension qui caractérise l'orifice, par exemple le diamètre pour un orifice de section circulaire, ou par exemple la longueur, largeur ou hauteur pour un orifice de section différente.

Selon d'autres modes de réalisation de l'invention, le dispositif de purge libère l'air dans l'espace radialement intérieur à la jante par au moins deux orifices. La multiplication du nombre d'orifices de sorties de l'air peut encore permettre de filtrer les éventuels débris entraînés lors du dégonflage, le diamètre des orifices pouvant diminuer avec l'augmentation de leur nombre. La multiplication des orifices peut également contribuer à diminuer le bruit.

Selon un mode de réalisation avantageux de l'invention, le dispositif de purge comporte un système de contrôle pour déplacer le clapet en position de purge dès que la pression du pneumatique dépasse une pression seuil.

Un tel mode de réalisation de l'invention consiste à prévoir un système de contrôle qui va déclencher l'ouverture du dispositif de purge au-delà d'une pression seuil prédéterminée. Un tel système est en outre avantageusement associé à une alerte de l'opérateur, une augmentation de la pression ayant forcément une origine qu'il peut être préférable de déterminer.

Selon une première variante de ce mode de réalisation de l'invention, la vanne de purge comportant un moyen compressible assurant la position normalement fermée combinée à une section du clapet supérieure à la section du piston, ledit dispositif de purge comporte un système de contrôle de type passif et la pression du pneumatique maintient la vanne ouverte jusqu'à une pression définie par le moyen compressible.

Selon cette variante de réalisation, l'état fermé du clapet est obtenu par un moyen compressible tel qu'un ressort qui appui sur la face du clapet qui n'est pas au contact de l'air de gonflage. Pour cela, la raideur du moyen compressible compense la force induite par la combinaison de la pression de gonflage et de la différence entre la surface du clapet et la surface du piston. Conformément à l'invention, la raideur du moyen compressible va être définie pour assurer cette compensation et en outre maintenir le clapet fermé jusqu'à une pression de gonflage telle que la force exercée par le moyen compressible sur le clapet est supérieure à la force qu'exerce la dite «pression de gonflage sur la surface du clapet correspondant à la différence entre la surface du clapet et la surface du piston. En conséquence dès que la pression de gonflage dépasse cette pression que l'on qualifie de « pression seuil », le clapet passe en position ouverte pour se refermer dès que la pression de gonflage est redescendue.

Selon une deuxième variante de ce mode de réalisation de l'invention, il peut être prévu un système de contrôle de type passif consistant en un tuyau de liaison entre la surface du piston qui n'est normalement pas au contact de l'air de gonflage et l'environnement de gonflage soumis à la pression de gonflage qui s'ouvre dès qu'une pression seuil est atteinte.

Les inventeurs proposent par exemple d'associer un système à ce tube tel qu'une valve diaphragme calibrée pour se rompre au seuil de pression prédéfini et ouvrir un passage pour l'air, au travers du tuyau, depuis la cavité de l'ensemble monté vers la surface du piston qui n'est normalement pas au contact de l'air de gonflage. Un tel système est avantageusement associé à un clapet anti-retour pour éviter une pression non souhaitée qui viendrait s'exercer par exemple sur la valve diaphragme lorsque le clapet est ouvert sous l'effet d'une pression de commande d'un opérateur.

La mise en relation de la cavité de l'ensemble monté avec la surface du piston qui n'est normalement pas au contact de l'air de gonflage va conduire à l'ouverture du clapet jusqu'à ce que la pression de l'ensemble monté autorise à nouveau sa fermeture. Dans le cas par exemple, d'un dispositif de purge qui comporte un clapet et un piston de section identiques et un moyen compressible tel qu'un ressort qui assure la position de fermeture du clapet, c'est la raideur du ressort qui va définir la pression finale de l'ensemble monté dès lors que la valve diaphragme est rompue. Cette raideur sera avantageusement choisie pour autoriser un roulage de l'ensemble monté et ne pas nécessiter une intervention sur le lieu de dégonflage qui n'est pas nécessairement approprié pour des interventions de types réparations, permutation ou changement de pneumatiques.

Selon une troisième variante de ce mode de réalisation de l'invention, ledit dispositif de purge comporte un système de contrôle de type actif selon lequel, connaissant la pression du pneumatique, la vanne peut être maintenue ouverte par l'intermédiaire d'une commande d'un opérateur. L'opérateur peut avoir connaissance de la pression de gonflage de l'ensemble monté par exemple par l'intermédiaire d'un capteur de pression et/ou de température. Pour une raison quelconque, l'opérateur peut décider de déclencher l'ouverture du clapet en exerçant une force de commande sur le piston telle que décrit précédemment, notamment par action d'air comprimé sur la surface du piston qui ne vient pas au contact de l'air de gonflage.

Dans le cas de la troisième variante consistant en un système de contrôle actif, les inventeurs proposent également d'utiliser la pression du pneumatique pour agir directement sur le piston du dispositif de purge et provoquer l'ouverture du clapet mais cette fois-ci à l'aide d'un système commandé par un opérateur, ledit système étant par exemple prévu sur un tuyau reliant la cavité de l'ensemble monté à la surface du piston qui n'est normalement pas au contact de l'air. Le fonctionnement du dispositif de purge et plus particulièrement son ouverture sont alors semblables au cas précédent du système de contrôle passif.

Selon une autre variante de ce mode de réalisation de l'invention, selon lequel le dispositif de purge comporte un système de contrôle pour déplacer le clapet en position de purge dès que la pression de l'ensemble monté dépasse une pression seuil, ledit dispositif de purge combine un système de contrôle de type actif et un système de contrôle de type passif. Il est alors possible de maîtriser la pression de l'ensemble monté soit par une action volontaire lorsque par exemple l'opérateur est conscient du dépassement et/ou de l'approche d'une valeur de pression seuil soit par une action automatique déclenchée par un système de type passif.

Le dispositif de purge ainsi réalisé selon l'invention autorise un dégonflage plus rapide, son diamètre et son débit pouvant être adaptés au besoin défini par le volume de l'ensemble monté et sa pression de gonflage, sans aucun risque pour l'opérateur.

En outre, il autorise également l'adjonction de systèmes de contrôle actif et/ou passif qui vont permettre d'éviter tous risque de roulages avec des pressions trop élevées et encore limiter les temps d'attentes qui existent actuellement lorsque des pressions trop élevées apparaissent notamment pour limiter les risques pouvant conduire à un endommagement des pneumatiques.

L'invention propose encore un procédé de dégonflage d'un ensemble monté constitué d'une roue comportant une jante et d'un pneumatique pour véhicule, par un dispositif de purge selon l'un quelconque des modes de réalisation précédemment décrit, comprenant :
- une étape de génération d'une force de commande assurée par de l'air comprimé conduit jusqu'à la surface du piston qui n'est pas destinée à être au contact de l'air de gonflage en position de fermeture,
- une étape d'ouverture du clapet par action de la force de commande sur le piston.

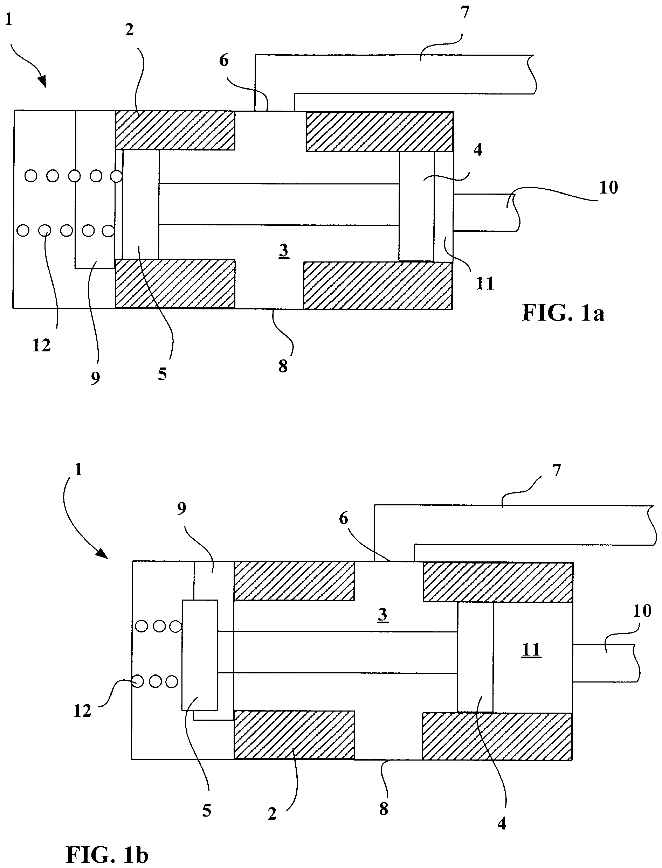

D'autres détails et caractéristiques avantageux de l'invention ressortiront ci-après de la description d'exemples de réalisation de l'invention en référence aux figures 1 à 3 qui représentent :
- figure la, 1b une représentation schématique d'une valve de purge selon un premier mode de réalisation de l'invention,
- figure 2, une représentation schématique d'une valve de purge selon un deuxième mode de réalisation de l'invention,
- figure 3, une représentation schématique d'une valve de purge selon un troisième mode de réalisation de l'invention.

Les figures ne sont pas représentées à l'échelle pour en simplifier la compréhension.

Les Figures la, 1b représentent des vues schématiques en coupe d'un dispositif de purge 1 réalisé conformément à l'invention destiné à être associé au circuit de gonflage d'un ensemble monté. Le dispositif de purge 1 est notamment constitué d'un corps 2 présentant notamment une cavité 3 dans lequel un piston 4 solidaire d'un clapet 5 est mobile.

Les différents éléments constitutifs de la vanne de purge peuvent être réalisés en tous matériaux permettant d'obtenir une précision dimensionnelle et une rigidité suffisantes ; il peut s'agir d'acier inoxydable, de matériaux injectés, ...

Sur les figures, ne sont pas représentés, par soucis de simplification les joints d'étanchéité nécessaire entre les éléments fixés entre eux et entre les éléments mobiles les uns par rapport aux autres. L'invention requiert une étanchéité importante qui peut être obtenue selon les connaissances de l'homme du métier par la présence de joints toriques ou joint élastique métallique entre les liaisons roue/corps de vanne et/ou corps de vanne/piston ou encore de profil de pente du piston autorisant un contact métal/métal.

Ne sont également pas représentées sur les figures les éléments de fixation telles que les zones de filetage sur les différents éléments constitutifs du dispositif de purge.

La cavité 3 associée au piston 4 et au clapet 5 forme un volume étanche comportant un orifice 6 raccordée au tuyau de gonflage 7. Ce tuyau de gonflage 7 se prolonge jusqu'à un espace accessible à un opérateur qui pourra connecter un compresseur en vue du gonflage de l'ensemble monté. Face à l'orifice 6, on trouve encore un orifice 8 dont la fonction est de conduire l'air de gonflage jusqu'à l'ensemble monté.

Lorsque le dispositif de purge est directement fixé sur la jante de l'ensemble monté, cet orifice 8 est directement raccordé au trou de gonflage prévu sur la jante. Il est encore possible selon d'autres modes de réalisation de ne pas souhaiter raccorder le dispositif de purge à la jante. L'orifice 8 est alors raccordé au trou de gonflage de la jante par l'intermédiaire d'un tuyau , non représenté sur les figures, dont la section doit être au moins égale à la section de purge du dispositif de purge 1.

Le piston 4 et le clapet 5, solidaires l'un de l'autre sont mobiles dans la cavité 3 tout en conservant l'étanchéité de la cavité, le piston 4 et le clapet 5 comportant des joints d'étanchéité. Le clapet 5 est ainsi mobile entre une position de fermeture telle qu'illustrée sur la figure la et une position de purge illustrée sur la figure 1b.

La figure 1b montre le dispositif de purge 1 dans sa position de purge. Le clapet 5 déplacé par rapport à sa position de la figure la est dans une position telle qu'il offre une ouverture en offrant un passage pour l'air de gonflage jusqu'à l'orifice 9 prévu dans le corps 2 du dispositif de purge 1.

Le dispositif de purge 1 comporte encore un tuyau 10 raccordé à une cavité 11 du corps 2, fermée par le piston 4. Ce tuyau 10 permet de conduire de l'air comprimé qui viendra agir sur le piston 4 pour commander le clapet 5 vers sa position d'ouverture ou de purge.

Le dispositif de purge 1 comporte encore un ressort 12 comprimé entre d'une part un appui sur une paroi du corps 2 et un appui sur le clapet 5. La compression et la raideur du ressort sont prédéfinies pour que le clapet 5 soit en position normalement fermée comme représentée sur la figure la, la figure 1b illustrant le dispositif de purge 1 dans un état ouvert.

Lorsque l'on souhaite gonflé un ensemble monté auquel est associé le dispositif de purge 1, de l'air comprimé est envoyé par le tuyau 7 et traverse la cavité 3 depuis l'orifice 6 jusqu'à l'orifice 8 pour atteindre l'ensemble monté. Dans le cas des figures la, 1b, la surface du piston 4 exposée à l'air de gonflage et la surface du clapet 5 exposée à l'air de gonflage sont identiques. Quelle que soit la pression de l'air de gonflage, celui-ci n'a aucun effet sur la mobilité de l'ensemble piston 4/clapet 5. Comme expliqué précédemment, c'est le ressort 12 qui permet d'assurer la position de fermeture du clapet 5.

Sur la figure 1b, la position ouverte du clapet 5 est obtenue en envoyant de l'air comprimé dans la cavité 11 par le tuyau 10. Cet air vient exercer une force sur la surface du piston 4 qui n'est pas au contact de l'air de gonflage.

La force exercée par cet air comprimé doit être suffisante pour entraîner la compression du ressort 12 pour autoriser le déplacement de l'ensemble piston 4 / clapet 5. Les propriétés du ressort et notamment sa raideur son donc choisies pour permettre une ouverture du dispositif de purge 1 sans nécessité un outillage trop complexe.

Lorsque le piston 4 du dispositif de purge 1 est déplacé et que le clapet 5 atteint sa position d'ouverture, il se crée une section annulaire d'ouverture en périphérie du clapet 5 qui libère l'air de gonflage. Cet air de gonflage est ensuite évacué par l'orifice 9 formé sur le corps 2 du dispositif de purge 1.

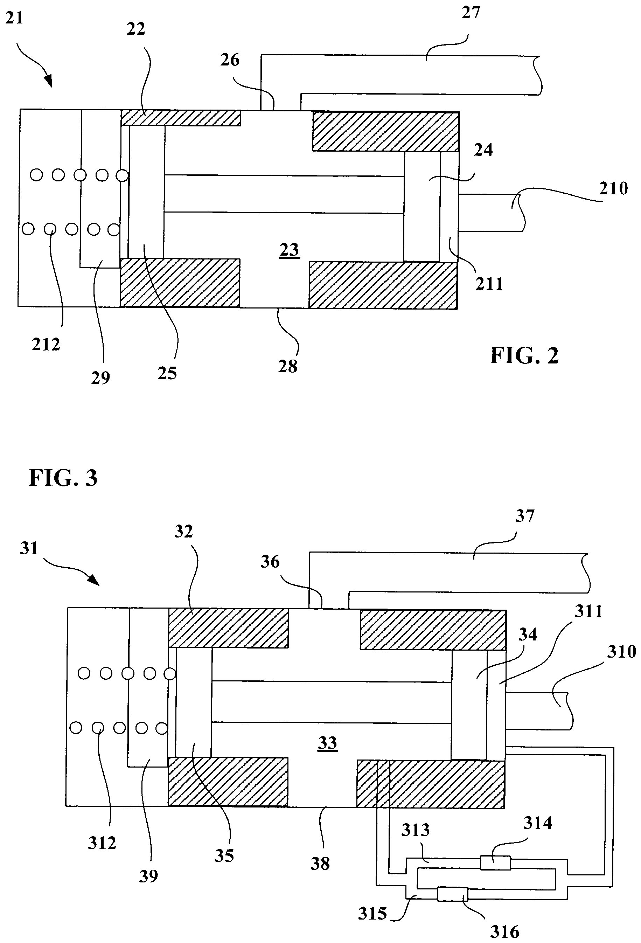

La figure 2 illustre un dispositif de purge 21 qui présente un système de contrôle passif qui entraîne l'ouverture du clapet 25 dès lors qu'une pression seuil prédéfinie est atteinte dans l'ensemble monté. Il est possible de voir apparaître une élévation de pression dans l'ensemble monté due notamment à une élévation de la température de l'air de gonflage par exemple du fait du pneu ou des systèmes de freinage. Il est préférable d'éviter ce type d'élévation de la pression notamment pour préserver l'intégrité du pneumatique.

Dans le cas de la figure 2, la conception du dispositif de purge 21 est telle que la surface du piston 24 au contact de l'air de gonflage est inférieure à la surface du clapet 25 au contact de l'air de gonflage. Le maintien du clapet 25 dans la position de fermeture est, comme dans le cas de la figure 1, assurée par la présence d'un ressort 212 dont les caractéristiques et notamment la raideur sont prévues, dans le cas de la figure 2, pour compenser la force résultant de la pression de l'air de gonflage qui s'exerce sur la surface égale à la différence entre les surfaces du clapet 25 et du piston 24. Cette force étant proportionnelle à la pression de gonflage, les caractéristiques du ressort vont pouvoir être choisies pour correspondre à une pression de l'ensemble monté donnée que l'on qualifie de « pression seuil ». Cela signifie qu'au-delà de cette pression seuil, le ressort est mis en compression et le clapet 25 est amené dans une position de purge. Dès que la pression redescend en dessous de cette pression seuil, le clapet 25 revient dans sa position normale de fermeture sous l'action du ressort.

La figure 3 illustre également un dispositif de purge 31 comportant un système de contrôle passif et comportant en outre un système de contrôle actif.

Le dispositif de purge 31 est semblable à celui de la figure 1 et comporte en plus un conduit supplémentaire 313 qui relie la cavité 33 du corps 32 à la cavité 311 délimitée par la surface du piston 34 qui n'est pas au contact de l'air de gonflage. Ce conduit 313 comporte un dispositif 314 obturant le passage de l'air et capable de s'ouvrir dès lors que la pression seuil prédéterminée est atteinte ; un tel élément est par exemple une valve diaphragme calibrée pour se rompre au seuil de pression prédéfini. La combinaison du conduit 313 et du dispositif 314 constitue un système de contrôle passif qui permet de limiter les risques liés à des élévations de pression de l'ensemble monté.

Dans le cas de la figure 3, le choix de la dimension et de la raideur du ressort 312 va permettre de définir la pression finale de l'ensemble monté dès lors que la pression seuil est atteinte, puisque c'est la pression de l'ensemble monté qui vient exercé la force de commande sur le piston 34. Un choix est par exemple d'aboutir à une pression de deux bars qui va permettre un retour du véhicule non chargé et à vitesse lente vers un atelier soit pour réparation soit pour remettre à neuf ce système de contrôle passif, par exemple en remplaçant la valve diaphragme.

Le dispositif de purge 31 comporte également un autre conduit supplémentaire 315 qui relie qui relie la cavité 33 du corps 32 à la cavité 311 délimitée par la surface du piston 34 qui n'est pas au contact de l'air de gonflage. Ce conduit 315 est associée à une commande 316 pilotée par un opérateur depuis la cabine du véhicule ou bien situé à côté du véhicule, ladite commande opérant une ouverture du conduit 315 et donc à l'ouverture du clapet 35 et donc au dégonflage de l'ensemble monté. Ce mode de dégonflage maîtrisé puisque l'opérateur le déclenche et l'arrête comme il le souhaite constitue un système de contrôle actif. Il peut en outre être associé à un système de purge du conduit 315 actionné lors de la phase d'arrêt qui permet de ramener la cavité 311 à la pression atmosphérique.

Les conduits 313 et 315 comportent avantageusement des clapets anti-retour ou des dispositifs équivalents pour éviter le passage de l'air conduit par le conduit 310. De la même façon, le conduit 310 peut comporter un clapet anti-retour pour éviter le passage de l'air conduit par les conduits 313 et 315.

L'ouverture du dispositif de purge 1,21,31, que ce soit dans le cas des figures 1, 2 ou 3, conduit à la création d'un orifice annulaire en extrémité de la cavité 3, 23, 33 au sein du corps 2, 22, 32. Cet orifice annulaire est prévu pour offrir une surface de sortie à l'air suffisamment importante pour diminuer considérablement les temps de dégonflage par rapport aux solutions actuelles tout en limitant localement la dimension de l'orifice pour limiter le passage de particules solides contenues dans l'ensemble monté et qui pourraient constituées des projectiles emportées par le courant d'air de dégonflage.

Le dispositif de purge selon l'invention présente encore l'avantage d'être facilement adaptable sur des roues existantes et facilement mis en place en général. En outre, le dispositif de purge peut être conçu sans difficulté pour que les parties internes soient facilement démontables pour leur entretien, notamment indépendamment du démontage du pneumatique ; il est en effet notamment important de pouvoir le nettoyer régulièrement, ledit dispositif de purge selon l'invention étant susceptible de retenir des particules pour éviter leur projection en dehors de la cavité de l'ensemble monté.

Des essais de dégonflage ont été réalisés sur des ensembles montés comportant des pneumatiques de dimensions 59/80R63 et 44/80R57. Les essais ont été réalisés sur des ensembles montés comportant une vanne de purge selon l'invention.

D'autres essais ont été réalisés sur ces mêmes ensembles montés en effectuant un dégonflage de manière usuelle à partir de la vanne de gonflage.

Les résultas obtenus sont présentés dans le tableau suivant :

| | 59/80R63 | 44/80R57 |
|---|---|---|
| Dégonflage par dispositif de purge selon l'invention | 3.20 mn | 2 mn |
| Dégonflage par valve de gonflage | 42 mn | 28 mn |

Ces résultats montrent outre les avantages en termes de simplicité et de sécurité que les temps de dégonflages obtenus selon l'invention sont très en dessous des temps usuels et peuvent conduire à des gains notables en termes de productivité des véhicules.

Le dispositif de purge selon l'invention est particulièrement intéressant pour des ensembles montés de grande dimension pour des applications de type génie civil. Le dispositif peut encore être utilisé pour tout type d'ensemble monté tel que des ensembles montés pour véhicule poids-lourds, notamment ceux destinés à équiper des véhicules en monte simple en substitution d'ensembles montés jumelés, des ensembles montés pour véhicules de type agricole notamment ceux de grandes dimensions gonflés à basse pression.

## Revendications

1. - Dispositif de purge (1, 21, 31) pour un ensemble monté pour véhicule constitué d'une roue comportant une jante et d'un pneumatique, ledit dispositif (1, 21, 31) comprenant un corps (2, 22, 32) associé au conduit de gonflage (7, 27, 37) de l'ensemble monté, ledit corps étant destiné à être soumis à la pression de gonflage de l'ensemble monté, et un piston (4, 24, 34) mobile au sein du corps, ledit piston actionnant un clapet (5, 25, 35), solidaire du piston, entre une position de fermeture et une position de purge du corps, ledit clapet étant normalement fermé, le clapet et le piston présentant chacun une face destinée à être exposée à l'air de gonflage au sein du corps en position de fermeture, l'ouverture du clapet étant obtenue par action d'une force de commande sur le piston, la force de commande étant assurée par de l'air comprimé (10, 11 ; 210, 211 ; 310, 311) conduit jusqu'à la surface du piston (4, 24, 34) qui n'est pas destinée à être au contact de l'air de gonflage en position de fermeture, **caractérisé en ce qu'une** cavité (3, 23, 33) associée au piston (4, 24, 34) et au clapet (5, 25, 35) forme un volume étanche comportant un orifice (6, 26, 36) associé au conduit de gonflage (7, 27, 37) et un autre orifice (8, 28, 38), en face de l'orifice (6, 26, 36), pour conduire l'air de gonflage à l'ensemble monté.

2. - Dispositif de purge (1, 21, 31) selon la revendication 1, **caractérisé en ce que,** dans sa position ouverte, le dispositif de purge (1, 21, 31) présente au moins un orifice d'évacuation (9, 29, 39).

3. - Dispositif de purge (1, 21, 31) selon la revendication 2, **caractérisé en ce que** l'orifice d'évacuation (9, 29, 39) présente au moins une dimension caractéristique inférieure à 10 mm.

4. - Dispositif de purge (21, 31) selon l'une des revendications précédentes, **caractérisé en ce qu'il** comporte un système de contrôle pour déplacer le piston (24, 34) en position de purge dès que la pression du pneumatique dépasse une pression seuil.

5. - Dispositif de purge (21, 31) selon la revendication 4, comportant un moyen compressible assurant la position normalement fermée, **caractérisé en ce qu'il** comporte un système de contrôle de type passif (313, 314) et **en ce que** la pression du pneumatique maintient le clapet (25, 35) ouvert jusqu'à une pression définie par le moyen compressible.

6. - Dispositif de purge (21) selon la revendication 5, **caractérisé en ce que** le système de contrôle passif est obtenu par une section de la face du piston (24) destinée à être exposée à l'air de gonflage inférieure à la section de la face du clapet (25) destinée à être exposée à l'air de gonflage.

7. - Dispositif de purge (31) selon l'une des revendications 4 à 6, **caractérisé en ce qu'il** comporte un système de contrôle de type actif (315, 316) et **en ce que** la pression de gonflage du pneumatique maintient le clapet (35) ouvert par l'intermédiaire d'une commande d'un opérateur.

8. - Dispositif de purge (1, 21, 31) selon l'une des revendications précédentes pour un ensemble monté pour un véhicule de type dumper.

9. - Procédé de dégonflage d'un ensemble monté constitué d'une roue comportant une jante et d'un pneumatique pour véhicule par un dispositif de purge selon l'une des revendications 1 à 8, comprenant :
- une étape de génération d'une force de commande assurée par de l'air comprimé (10, 11; 210, 211; 310, 311) conduit jusqu'à la surface du piston (4, 24, 34) qui n'est pas destinée à être au contact de l'air de gonflage en position de fermeture,
- une étape d'ouverture du clapet (5, 25, 35) par action de la force de commande sur le piston (4, 24, 34).

## Patentansprüche

1. Entlüftungsvorrichtung (1, 21, 31) für eine montierte Einheit für ein Fahrzeug, welche aus einem Rad, das eine Felge aufweist, und aus einem Reifen besteht, wobei die Vorrichtung (1, 21, 31) umfasst: einen Körper (2, 22, 32), welcher dem Aufblasrohr (7, 27, 37) der montierten Einheit zugeordnet ist, wobei der Körper dazu bestimmt ist, dem Aufblasdruck der montierten Einheit ausgesetzt zu sein, und einen Kolben (4, 24, 34), der im Inneren des Körpers beweglich ist, wobei der Kolben ein mit dem Kolben fest verbundenes Ventil (5, 25, 35) zwischen einer Schließposition und einer Entlüftungsposition des Körpers betätigt, wobei das Ventil normalerweise geschlossen ist, wobei das Ventil und der Kolben jeweils eine Seite aufweisen, die dazu bestimmt ist, in der Schließposition gegenüber der Aufblasluft im Inneren des Körpers exponiert zu sein, wobei das Öffnen des Ventils durch Einwirkung einer Steuerkraft auf den Kolben erzielt wird, wobei die Steuerkraft durch Druckluft (10, 11; 210, 211; 310, 311) gewährleistet wird, die bis zu der Fläche des Kolbens (4, 24, 34) geleitet wird, welche nicht dazu bestimmt ist, sich in der Schließposition mit der Aufblasluft in Kontakt zu befinden, **dadurch gekennzeichnet, dass** ein Hohlraum (3, 23, 33), der dem Kolben (4, 24, 34) und dem Ventil (5, 25, 35) zugeordnet ist, ein dichtes Volumen bildet, das eine Öffnung (6, 26, 36), die dem Aufblasrohr (7, 27, 37) zugeordnet ist, und eine weitere Öffnung (8, 28, 38) gegenüber der Öffnung (6, 26, 36), um die Aufblasluft zu der montierten Einheit zu leiten, aufweist.

2. Entlüftungsvorrichtung (1, 21, 31) nach Anspruch 1, **dadurch gekennzeichnet, dass** die Entlüftungsvorrichtung (1, 21, 31) in ihrer geöffneten Position wenigstens eine Auslassöffnung (9, 29, 39) aufweist.

3. Entlüftungsvorrichtung (1, 21, 31) nach Anspruch 2, **dadurch gekennzeichnet, dass** die Auslassöffnung (9, 29, 39) wenigstens eine charakteristische Abmessung aufweist, die kleiner als 10 mm ist.

4. Entlüftungsvorrichtung (21, 31) nach einem der vorhergehenden Ansprüche, **dadurch gekennzeichnet, dass** sie ein Kontrollsystem aufweist, um den Kolben (24, 34) in die Entlüftungsposition zu verschieben, sobald der Druck des Reifens einen Schwellenwertdruck überschreitet.

5. Entlüftungsvorrichtung (21, 31) nach Anspruch 4, welche ein zusammendrückbares Mittel aufweist, das die normalerweise geschlossene Position sicherstellt, **dadurch gekennzeichnet, dass** sie ein Kontrollsystem vom passiven Typ (313, 314) aufweist, und dadurch, dass der Druck des Reifens das Ventil (25, 35) bis zu einem durch das zusammendrückbare Mittel definierten Druck offen hält.

6. Entlüftungsvorrichtung (21) nach Anspruch 5, **dadurch gekennzeichnet, dass** das passive Kontrollsystem erzielt wird durch einen Querschnitt der Seite des Kolbens (24), die dazu bestimmt ist, gegenüber der Aufblasluft exponiert zu sein, welcher kleiner als der Querschnitt der Seite des Ventils (25) ist, die dazu bestimmt ist, gegenüber der Aufblasluft exponiert zu sein.

7. Entlüftungsvorrichtung (31) nach einem der Ansprüche 4 bis 6, **dadurch gekennzeichnet, dass** sie ein Kontrollsystem vom aktiven Typ (315, 316) aufweist, und dadurch, dass der Aufblasdruck des Reifens das Ventil (35) über einen Befehl eines Bedieners offen hält.

8. Entlüftungsvorrichtung (1, 21, 31) nach einem der vorhergehenden Ansprüche für eine montierte Einheit für ein Fahrzeug vom Typ eines Dumpers.

9. Verfahren zum Luftablassen aus einer montierten Einheit, welche aus einem Rad, das eine Felge aufweist, und aus einem Reifen besteht, für ein Fahrzeug durch eine Entlüftungsvorrichtung nach einem der Ansprüche 1 bis 8, umfassend:
- einen Schritt der Erzeugung einer Steuerkraft, die durch Druckluft (10, 11; 210, 211; 310, 311) gewährleistet wird, die bis zu der Fläche des Kolbens (4, 24, 34) geleitet wird, welche nicht dazu bestimmt ist, sich in der Schließposition mit der Aufblasluft in Kontakt zu befinden,
- einen Schritt des Öffnens des Ventils (5, 25, 35) durch Einwirkung der Steuerkraft auf den Kolben (4, 24, 34).

## Claims

1. - Purging device (1, 21, 31) for an assembled unit for a vehicle, consisting both of a wheel comprising a rim and of a tyre, said device (1, 21, 31) comprising a body (2, 22, 32) connected to the inflation tube (7, 27, 37) of the assembled unit, said body being designed to be subjected to the inflation pressure of the assembled unit, and a piston (4, 24, 34) able to move inside the body, said piston operating an open/close element (5, 25, 35), fixed to the piston, between a closed position and a purging position of the body, said open/close element being normally closed, the open/close element and the piston each having a face designed to be exposed to the inflation air inside the body in the closed position, the open/close element being opened by the action of an operating force on the piston, the operating force being provided by compressed air (10, 11; 210, 211; 310, 311) directed onto that surface of the piston (4, 24, 34) which is not designed to be in contact with the inflation air in the closed position **characterized in that** a cavity (3, 23, 33) associated with the piston (4, 24, 34) and with the open/close element (5, 25, 35) forms an airtight volume comprising an orifice (6, 26, 36) associated with the inflation tube (7, 27, 37) and another orifice (8, 28, 38) facing the orifice (6, 26, 36) for carrying the inflation air to the assembled unit.

2. - Purging device (1, 21, 31) according to Claim 1, **characterized in that** in its open position the purging device (1, 21, 31) has at least one discharge orifice (9, 29, 39) .

3. - Purging device (1, 21, 31) according to Claim 2, **characterized in that** the discharge orifice (9, 29, 39) has at least one characteristic dimension that is less than 10 mm.

4. - Purging device (21, 31) according to one of the preceding claims, **characterized in that** it comprises a control system for moving the piston (24, 34) to the purging position as soon as the tyre pressure exceeds a threshold pressure.

5. - Purging device (21, 31) according to Claim 4, comprising a compressible means providing the normally closed position, **characterized in that** it comprises a passive-type control system (313, 314) and **in that** the tyre pressure keeps the open/close element (25, 35) open until a pressure defined by the compressible means is reached.

6. - Purging device (21) according to Claim 5, **characterized in that** the passive control system is provided by the fact that the cross section of the piston (24) face designed to be exposed to the inflation air is smaller than the cross section of the open/close element (25) face designed to be exposed to the inflation air.

7. - Purging device (31) according to one of Claims 4 to 6, **characterized in that** it comprises an active-type control system (315, 316) and **in that** the tyre inflation pressure keeps the open/close element (35) open by means of an operator command.

8. - Purging device (1, 21, 31) according to one of the preceding claims for an assembled unit for a dumper-type vehicle.

9. - Method of deflating an assembled unit consisting of both a wheel comprising a rim and a tyre for a vehicle by means of a purging device according to one of Claims 1 to 3, comprising:
- a step of generating an operating force provided by compressed air (10, 11; 210, 211; 310, 311) carried as far as that surface of the piston (4, 24, 34) which is not designed to be in contact with the inflation air in the closed position,
- a step of opening the open/close element (5, 25, 35) by the action of the operating force on the piston (4, 24, 34).
